# EUROPEAN PATENT APPLICATION

(11) **EP 3 337 165 A1**
(43) Date of publication of application: **20.06.2018**
(21) Application number: 16840541.3
(22) Date of filing: 03.03.2016
(51) Int. Cl.: H04N 7/15

(54) **VIDEO COMMUNICATION METHOD AND SYSTEM**

(30) Priority: 28.08.2015 CN 201510543795
(71) Applicant: Huawei Technologies Co., Ltd., Longgang District Shenzhen, Guangdong 518129 (CN); Fraunhofer Gesellschaft zur Förderung der angewandten Forschung e.V., 80686 München (DE)
(72) Inventor: REINHARDT, Michael, 80686 Munich (DE); SCHREER, Oliver, 80686 Munich (DE); FELDMANN, Ingo, 80686 Munich (DE); GAO, Shan, Shenzhen, Guangdong 518129 (CN); YAO, Jun, Shenzhen, Guangdong 518129 (CN)
(74) Representative: Gill Jennings & Every LLP
(86) International application number: PCT/CN2016/075465
(87) International publication number: WO 2017/036111

(57) **Abstract**

Embodiments of the present invention provide a video communication method and system, applied to a scenario of video communication between a first location and a second location, and at least two users at the second location participate in the video communication. The method includes: determining a first user and a second user that are in a call or that are going to have a call with each other, where the first user is located at the first location, the second user is located at the second location, and the second user is any one of the at least two users; obtaining an eye-to-eye virtual view image of the first user; and displaying the eye-to-eye virtual view image of the first user on a display at the second location in a manner used for corresponding to the second user, so that the eye-to-eye virtual view image of the first user corresponds to the second user, where the manner used for corresponding to the second user is used to indicate that the first user and the second user are in a call or are going to have a call with each other. According to the embodiments of the present invention, multiple users at the second location can learn that the first user and the second user are in a call, thereby improving user experience.

## Description

This application claims priority to Chinese Patent Application No. 201510543795.5, filed with the Chinese Patent Office on August 28, 2015 and entitled "VIDEO COMMUNICATION METHOD AND SYSTEM", which is incorporated herein by reference in its entirety.

### TECHNICAL FIELD

The present invention relates to the communications field, and in particular, to a video communication method and system.

### BACKGROUND

Eye-to-eye video communication is closer to real face-to-face communication. Therefore, eye-to-eye video communication is a popular research topic of current point-to-point video communication. Single-person to single-person eye-to-eye video communication is relatively simple. It is relatively difficult to provide eye-to-eye video communication for a multi-person to multi-person video communication scenario. There are two scenarios for existing multi-person to multi-person video communication in the following.

A first scenario of multi-person to multi-person video communication is that there are multiple locations, and there is only one user at each location. In this scenario, depending on a location that a local user looks at and by means of careful rendering, a virtual view can be correctly generated and correctly transmitted to different remote users, so that eye-to-eye video communication can be implemented. That is, when there is one user at each location, eye-to-eye communication can be implemented by means of the existing solution.

A second scenario of multi-person to multi-person video communication is that there are multiple users at each location. The scenario may be referred to as a l:n communication scenario or an m:n communication scenario. There are multiple users at least one location.

For a case in which there are two users at each location (for example, there are three locations), the FP7 project 3DPresence has provided a solution by using an auto-stereoscopic (auto-stereoscopic) 3D display. This display may allow two local users to see a remote user in two complete different viewing angles.

In a video communication scenario in which there are multiple users at each location or a video communication scenario in which there are multiple users at at least one location, neither an eye-to-eye solution nor an effective indication indicating which user and which user are in a call can be provided.

In a current 2D display, only one viewing angle of any remote user can be provided. Therefore, to provide an eye-to-eye effect for the remote user, a virtual view in which the remote user looks at a virtual camera is generated (that is, an eye-to-eye virtual view is generated), all local users feel like being watched by the remote user. This case is usually referred to as the "Mona Lisa" effect (Mona Lisa effect). However, the local user cannot know a specific local user with which the remote user communicates. Consequently, user experience is poor.

### SUMMARY

Embodiments of the present invention provide a video communication method and system. The method can improve user experience of video communication.

According to a first aspect, a video communication method is provided. The method is applied to a scenario of video communication between a first location and a second location, and at least two users at the second location participate in the video communication. The method includes: determining a first user and a second user that are in a call or that are going to have a call with each other, where the first user is located at the first location, the second user is located at the second location, and the second user is any one of the at least two users; obtaining an eye-to-eye virtual view image of the first user; and displaying the eye-to-eye virtual view image of the first user on a display at the second location in a manner used for corresponding to the second user, so that the eye-to-eye virtual view image of the first user corresponds to the second user, where the manner used for corresponding to the second user is used to indicate that the first user and the second user are in a call or are going to have a call with each other.

With reference to the first aspect, in a first possible implementation, different users at the second location correspond to different display areas on the display at the second location, and the displaying the eye-to-eye virtual view image of the first user on a display at the second location in a manner used for corresponding to the second user includes: displaying, by using the display, the eye-to-eye virtual view image of the first user in an area corresponding to the second user on the display.

With reference to the first aspect, in a second possible implementation, the method further includes: marking the eye-to-eye virtual view image of the first user by using a characteristic corresponding to the second user, and the displaying the eye-to-eye virtual view image of the first user on a display at the second location in a manner used for corresponding to the second user includes: displaying, by using the display, an image obtained after the eye-to-eye virtual view image of the first user is marked by using the characteristic corresponding to the second user.

With reference to any one of the first aspect, or the first or the second possible implementation, in a third possible implementation, the determining a first user and a second user that are in a call or that are going to have a call with each other includes: detecting body action changes or input call instructions of the first user and the second user; determining, according to the body action change or the input call instruction of the first user, the first user that is in a call or that is going to have a call; and determining, according to the body action change or the input call instruction of the second user, the second user that is in a call or that is going to have a call.

With reference to any one of the first aspect, or the first to the third possible implementations of the first aspect, in a fourth possible implementation, the determining, according to the body action change or the input call instruction of the first user, the first user that is in a call or that is going to have a call includes: determining, when the body action change of the first user matches a preset body action change, the first user that is in a call or that is going to have a call, or determining, according to an indication of the input call instruction of the first user, the first user that is in a call or that is going to have a call; and the determining, according to the body action change or the input call instruction of the second user, the second user that is in a call or that is going to have a call includes: determining, when the body action change of the second user matches a preset body action change, the second user that is in a call or that is going to have a call, or determining, according to an indication of the input call instruction of the second user, the second user that is in a call or that is going to have a call.

According to a second aspect, a video communication system is provided. The system is applied to a scenario of video communication between a first location and a second location, and at least two users at the second location participate in the video communication. The system includes: a determining unit, configured to determine a first user and a second user that are in a call or that are going to have a call with each other, where the first user is located at the first location, the second user is located at the second location, and the second user is any one of the at least two users; an obtaining unit, configured to obtain an eye-to-eye virtual view image of the first user; and a display unit, configured to display the eye-to-eye virtual view image of the first user on a display at the second location in a manner used for corresponding to the second user, so that the eye-to-eye virtual view image of the first user corresponds to the second user, where the manner used for corresponding to the second user is used to indicate that the first user and the second user are in a call or are going to have a call with each other.

With reference to the second aspect, in a first possible implementation, different users at the second location correspond to different display areas on the display at the second location, and the display unit is configured to display, by using the display, the eye-to-eye virtual view image of the first user in an area corresponding to the second user on the display.

With reference to the second aspect, in a second possible implementation, the system further includes: a marking unit, configured to mark the eye-to-eye virtual view image of the first user by using a characteristic corresponding to the second user; and the display unit is configured to display, by using the display, an image obtained after the eye-to-eye virtual view image of the first user is marked by using the characteristic corresponding to the second user.

With reference to any one of the second aspect, or the first or the second possible implementation of the second aspect, in a third possible implementation, the determining unit is configured to: detect body action changes or input call instructions of the first user and the second user; determine, according to the body action change or the input call instruction of the first user, the first user that is in a call or that is going to have a call; and determine, according to the body action change or the input call instruction of the second user, the second user that is in a call or that is going to have a call.

With reference to any one of the second aspect, or the first to the third possible implementations of the second aspect, in a fourth possible implementation, the determining unit is configured to: determine, when the body action change of the first user matches a preset body action change, the first user that is in a call or that is going to have a call, or determine, according to an indication of the input call instruction of the first user, the first user that is in a call or that is going to have a call; and determine, when the body action change of the second user matches a preset body action change, the second user that is in a call or that is going to have a call, or determine, according to an indication of the input call instruction of the second user, the second user that is in a call or that is going to have a call.

Based on the foregoing technical solutions, in the embodiments of the present invention, the eye-to-eye virtual view image of the first user is displayed on the display at the second location in the manner used for corresponding to the second user, so that the eye-to-eye virtual view image of the first user corresponds to the second user. Therefore, multiple users at the second location can learn that the first user and the second user are in a call, thereby improving user experience.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a video communication method according to an embodiment of the present invention;
FIG. 2 is a schematic display diagram of a display at a second location according to an embodiment of the present invention;
FIG. 3 is a schematic display diagram of a display at a second location according to another embodiment of the present invention;
FIG. 4 is a schematic block diagram of a video communication system according to an embodiment of the present invention; and
FIG. 5 is a schematic block diagram of a video communication system according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

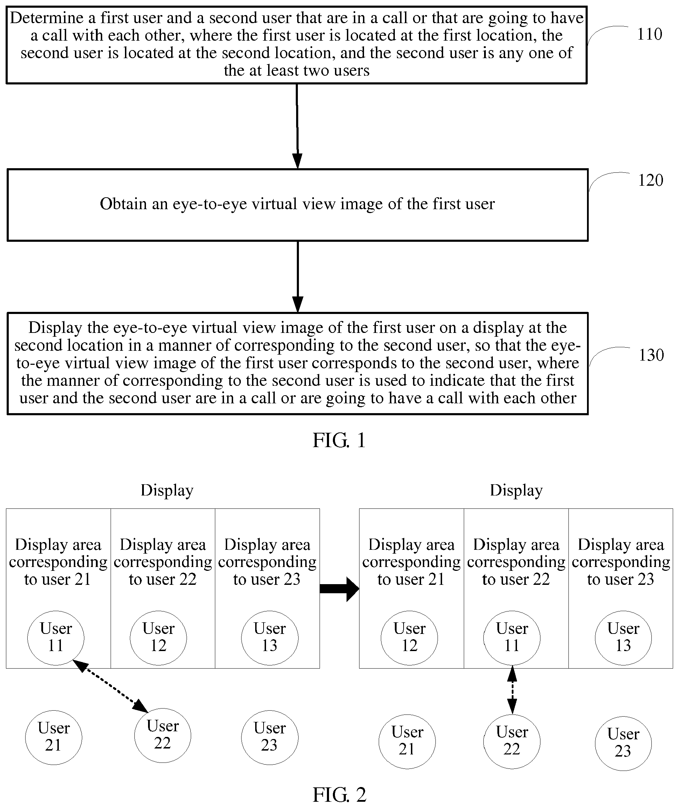

FIG. 1 is a schematic flowchart of a video communication method according to an embodiment of the present invention. The method shown in FIG. 1 is applied to a scenario of video communication between a first location and a second location, and at least two users at the second location participate in the video communication. The method includes the following steps:

110. Determine a first user and a second user that are in a call or that are going to have a call with each other, where the first user is located at the first location, the second user is located at the second location, and the second user is any one of the at least two users.

120. Obtain an eye-to-eye virtual view image of the first user.

130. Display the eye-to-eye virtual view image of the first user on a display at the second location in a manner used for corresponding to the second user, so that the eye-to-eye virtual view image of the first user corresponds to the second user, where the manner used for corresponding to the second user is used to indicate that the first user and the second user are in a call or are going to have a call with each other.

Therefore, in this embodiment of the present invention, the eye-to-eye virtual view image of the first user is displayed on the display at the second location in the manner used for corresponding to the second user, so that the eye-to-eye virtual view image of the first user corresponds to the second user. Therefore, multiple users at the second location can learn that the first user and the second user are in a call, thereby improving user experience.

It should be understood that the method in this embodiment of the present invention may be applied to a video communication system. For example, the system includes: a first device located at the first location, a second device located at the second location, and a cloud server (or referred to as a center server).

It should be understood that in 110, the first user and the second user that are in a call or that are going to have a call with each other may be determined by the second device. For example, the first device may determine, by means of detection, the first user that is in a call or that is going to have a call, then, the first device transmits information about the first user to the second device, and the second device determines, by means of detection, the second user that is in a call or that is going to have a call.

It should be further understood that in 120, the eye-to-eye virtual view image of the first user may be obtained by the second device. The second device may directly obtain the eye-to-eye virtual view image of the first user, or the second device may receive the eye-to-eye virtual view image of the first user that is sent by the cloud server or the first device. For example, the first device may generate the eye-to-eye virtual view image of the first user, and then, send the eye-to-eye virtual view image of the first user to the second device.

It should be further understood that in 130, the eye-to-eye virtual view image of the first user may be displayed by the second device by using the display.

Optionally, in another embodiment, different users at the second location correspond to different display areas on the display at the second location. In 130, the eye-to-eye virtual view image of the first user is displayed, by using the display, in an area corresponding to the second user on the display.

For example, as shown in FIG. 2, there are a user 21, a user 22, and a user 23 at the second location, and there are a user 11, a user 12, and a user 13 at the first location. On the display, there are a display area corresponding to the user 21, a display area corresponding to the user 22, and a display area corresponding to the user 23 from the left to the right in sequence. As shown in a left part of FIG. 2, the user 11 is displayed in the display area corresponding to the user 21, the user 12 is displayed in the display area corresponding to the user 22, and the user 13 is displayed in the display area corresponding to the user 23. When the second device determines, at a moment when the left part of FIG. 2 is shown, that the user 11 at the first location and the user 22 at the second location are in a call or are going to have a call, as shown in a right part of FIG. 2, the second device displays, at a next moment, an eye-to-eye virtual view image of the user 11 in the display area corresponding to the user 22 on the display.

Therefore, in this embodiment of the present invention, the eye-to-eye virtual view image of the first user is displayed in the area corresponding to the second user on the display, so that the eye-to-eye virtual view image of the first user corresponds to the second user. Therefore, multiple users at the second location can learn that the first user and the second user are in a call, thereby improving user experience.

Optionally, in another embodiment, the method in this embodiment of the present invention may further include: marking the eye-to-eye virtual view image of the first user by using a characteristic corresponding to the second user. In 130, an image obtained after the eye-to-eye virtual view image of the first user is marked by using the characteristic corresponding to the second user is displayed by using the display.

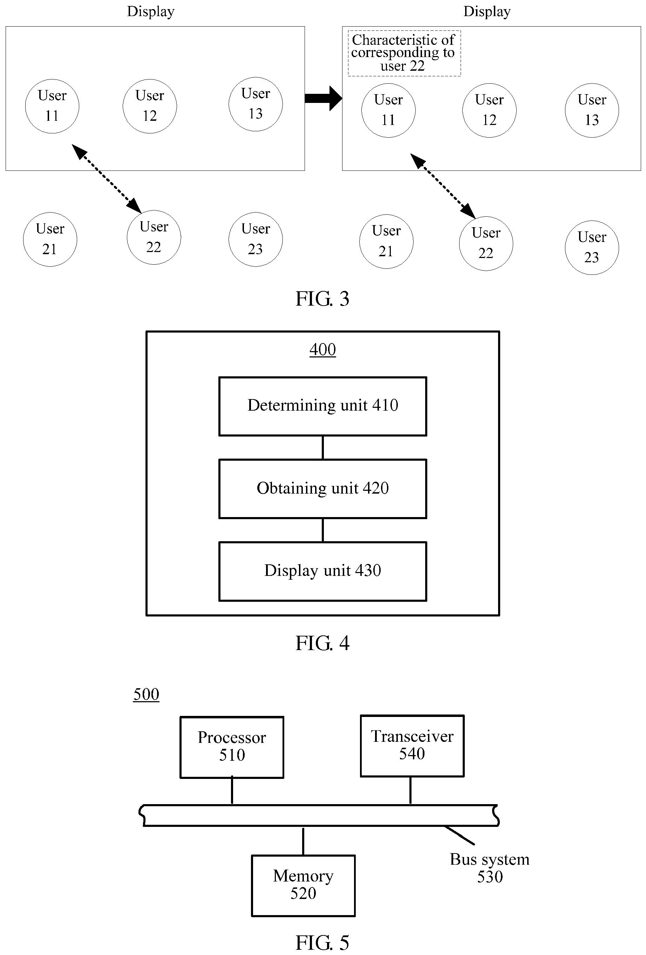

For example, as shown in FIG. 3, there are the user 21, the user 22, and the user 23 at the second location, and there are the user 11, the user 12, and the user 13 at the first location. The user 11, the user 12, and the user 13 are displayed on the display from the left to the right in sequence. When the second device determines, at a moment when a left part of FIG. 3 is shown, that the user 11 at the first location and the user 22 at the second location are in a call or are going to have a call, as shown in a right part of FIG. 3, at a next moment, the second device marks the eye-to-eye virtual view image of the user 11 by using a characteristic corresponding to the user 22, and displays, by using the display, an image obtained after the eye-to-eye virtual view image of the user 11 is marked by using the characteristic corresponding to the user 22.

Therefore, in this embodiment of the present invention, the image obtained after the eye-to-eye virtual view image of the first user is marked by using the characteristic corresponding to the second user is displayed by using the display, so that the eye-to-eye virtual view image of the first user corresponds to the second user. Therefore, multiple users at the second location can learn that the first user and the second user are in a call, thereby improving user experience.

Optionally, in another embodiment, in 110, body action changes or input call instructions of the first user and the second user are detected; the first user that is in a call or that is going to have a call is determined according to the body action change or the input call instruction of the first user; and the second user that is in a call or that is going to have a call is determined according to the body action change or the input call instruction of the second user.

Further, in another embodiment, in 110, the determining, according to the body action change or the input call instruction of the first user, the first user that is in a call or that is going to have a call includes: determining, when the body action change of the first user matches a preset body action change, the first user that is in a call or that is going to have a call, or determining, according to an indication of the input call instruction of the first user, the first user that is in a call or that is going to have a call; and the determining, according to the body action change or the input call instruction of the second user, the second user that is in a call or that is going to have a call includes: determining, when the body action change of the second user matches a preset body action change, the second user that is in a call or that is going to have a call, or determining, according to an indication of the input call instruction of the second user, the second user that is in a call or that is going to have a call.

It should be understood that the preset body action change may be a body action change such as head raising or hand raising. When the body action change of the user matches the preset body action change, it can be determined that the user is in a call or is going to have a call.

For example, the first device may detect the body action change or the input call instruction of the first user, and determine, according to the body action change or the input call instruction of the first user, that the first user is in a call or is going to have a call. The second device may detect the body action change or the input call instruction of the second user, and determine, according to the body action change or the input call instruction of the second user, that the second user is in a call or is going to have a call. For another example, alternatively, the cloud server may detect the body action changes or the input call instructions of the first user and the second user, and determine the first user and the second user. This is not limited in this embodiment of the present invention.

The video communication method according to the embodiments of the present invention is described in detail above with reference to FIG. 1 to FIG. 3, and a video communication system according to the embodiments of the present invention is described below with reference to FIG. 4 and FIG. 5.

FIG. 4 is a schematic block diagram of a video communication system according to an embodiment of the present invention. It should be understood that the system 400 shown in FIG. 4 corresponds to the method shown in FIG. 1, and can implement all processes in the method embodiment in FIG. 1. For a specific function of the system 400, refer to the corresponding description in FIG. 1. To avoid repetition, details are properly omitted herein.

The system 400 shown in FIG. 4 is applied to a scenario of video communication between a first location and a second location, and at least two users at the second location participate in the video communication. As shown in FIG. 4, the system 400 includes: a determining unit 410, an obtaining unit 420, and a display unit 430.

Specifically, the determining unit 410 is configured to determine a first user and a second user that are in a call or that are going to have a call with each other, where the first user is located at the first location, the second user is located at the second location, and the second user is any one of the at least two users.

The obtaining unit 420 is configured to obtain an eye-to-eye virtual view image of the first user.

The display unit 430 is configured to display the eye-to-eye virtual view image of the first user on a display at the second location in a manner used for corresponding to the second user, so that the eye-to-eye virtual view image of the first user corresponds to the second user, where the manner used for corresponding to the second user is used to indicate that the first user and the second user are in a call or are going to have a call with each other.

Therefore, in this embodiment of the present invention, the eye-to-eye virtual view image of the first user is displayed on the display at the second location in the manner used for corresponding to the second user, so that the eye-to-eye virtual view image of the first user corresponds to the second user. Therefore, multiple users at the second location can learn that the first user and the second user are in a call, thereby improving user experience.

It should be understood that in the video communication scenario, a video communication system may include a first device located at the first location, a second device located at the second location, and a cloud server (or referred to as a center server). In this embodiment of the present invention, the system 400 may be the video communication system, or may be the second device in the video communication system. This is not limited in this embodiment of the present invention.

It should be further understood that in this embodiment of the present invention, when the system 400 is the video communication system, the determining unit 410, the obtaining unit 420, and the display unit 430 that are included in the system 400 may be located at the first location, or may be located at the second location, or may be located at another location. This is not limited in this embodiment of the present invention.

Optionally, in another embodiment, different users at the second location correspond to different display areas on the display at the second location. The display unit 430 displays, by using the display, the eye-to-eye virtual view image of the first user in an area corresponding to the second user on the display.

Optionally, in another embodiment, the system 400 may further include: a marking unit, configured to mark the eye-to-eye virtual view image of the first user by using a characteristic corresponding to the second user. The display unit 430 displays, by using the display, an image obtained after the eye-to-eye virtual view image of the first user is marked by using the characteristic corresponding to the second user.

Optionally, in another embodiment, the determining unit 410 is configured to: detect body action changes or input call instructions of the first user and the second user; determine, according to the body action change or the input call instruction of the first user, the first user that is in a call or that is going to have a call; and determine, according to the body action change or the input call instruction of the second user, the second user that is in a call or that is going to have a call.

Optionally, in another embodiment, the determining unit 410 is configured to: determine, when the body action change of the first user matches a preset body action change, the first user that is in a call or that is going to have a call, or determine, according to an indication of the input call instruction of the first user, the first user that is in a call or that is going to have a call; and determine, when the body action change of the second user matches a preset body action change, the second user that is in a call or that is going to have a call, or determine, according to an indication of the input call instruction of the second user, the second user that is in a call or that is going to have a call.

FIG. 5 is a schematic block diagram of a video communication device according to an embodiment of the present invention. It should be understood that the system 500 shown in FIG. 5 corresponds to the method shown in FIG. 1, and can implement all processes in the method embodiment in FIG. 1. For a specific function of the system 500, refer to the corresponding description in FIG. 1. To avoid repetition, details are properly omitted herein.

The system 500 shown in FIG. 5 is applied to a scenario of video communication between a first location and a second location, and at least two users at the second location participate in the video communication. The system 500 includes: a processor 510, a memory 520, a bus system 530, and a transceiver 540.

Specifically, the processor 510 invokes, by using the bus system 530, code stored in the memory 520, to determine a first user and a second user that are in a call or that are going to have a call with each other. The first user is located at the first location, the second user is located at the second location, and the second user is any one of the at least two users. The transceiver 540 obtains an eye-to-eye virtual view image of the first user. The processor 510 displays the eye-to-eye virtual view image of the first user on a display at the second location in a manner used for corresponding to the second user, so that the eye-to-eye virtual view image of the first user corresponds to the second user. The manner used for corresponding to the second user is used to indicate that the first user and the second user are in a call or are going to have a call with each other.

Therefore, in this embodiment of the present invention, the eye-to-eye virtual view image of the first user is displayed on the display at the second location in the manner used for corresponding to the second user, so that the eye-to-eye virtual view image of the first user corresponds to the second user. Therefore, multiple users at the second location can learn that the first user and the second user are in a call, thereby improving user experience.

The method disclosed in the foregoing embodiment of the present invention may be applied to the processor 510, or implemented by the processor 510. The processor 510 may be an integrated circuit chip and has a signal processing capability. In an implementation process, each step of the method may be completed by using an integrated logic circuit of hardware in the processor 510 or an instruction in a software form. The processor 510 may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor 510 may implement or perform methods, steps, and logical block diagrams disclosed in the embodiments of the present invention. The general purpose processor may be a microprocessor or may be any conventional processor. Steps of the method disclosed with reference to the embodiments of the present invention may be directly performed and completed by means of a hardware decoding processor, or may be performed and completed by using a combination of hardware and software modules in a decoding processor. The software module may be located in a mature storage medium in the art, such as a random access memory (Random Access Memory, RAM), a flash memory, a read-only memory (Read-Only Memory, ROM), a programmable read-only memory, an electrically erasable programmable read-only memory, or a register. The storage medium is located in the memory 520. The processor 510 reads information in the memory 520, and completes the steps of the method in combination with hardware thereof. In addition to a data bus, the bus system 530 may further include a power bus, a control bus, a status signal bus, and the like. However, for the purpose of clear description, all buses are marked as the bus system 530 in the figure.

It should be understood that in the video communication scenario, a video communication system may include a first device located at the first location, a second device located at the second location, and a cloud server (or referred to as a center server). In this embodiment of the present invention, the system 500 may be the video communication system, or may be the second device in the video communication system. This is not limited in this embodiment of the present invention.

It should be further understood that in this embodiment of the present invention, when the system 500 is the video communication system, the processor 510, the memory 520, the bus system 530, and the transceiver 540 that are included in the system 500 may be located at the first location, or may be located at the second location, or may be located at another location. This is not limited in this embodiment of the present invention.

Optionally, in another embodiment, different users at the second location correspond to different display areas on the display at the second location. The processor 510 displays, by using the display, the eye-to-eye virtual view image of the first user in an area corresponding to the second user on the display.

Optionally, in another embodiment, the processor 510 is further configured to: mark the eye-to-eye virtual view image of the first user by using a characteristic corresponding to the second user. The processor 510 displays, by using the display, an image obtained after the eye-to-eye virtual view image of the first user is marked by using the characteristic corresponding to the second user.

Optionally, in another embodiment, the processor 510 is configured to: detect body action changes or input call instructions of the first user and the second user; determine, according to the body action change or the input call instruction of the first user, the first user that is in a call or that is going to have a call; and determine, according to the body action change or the input call instruction of the second user, the second user that is in a call or that is going to have a call.

Optionally, in another embodiment, the processor 510 is configured to: determine, when the body action change of the first user matches a preset body action change, the first user that is in a call or that is going to have a call, or determine, according to an indication of the input call instruction of the first user, the first user that is in a call or that is going to have a call; and determine, when the body action change of the second user matches a preset body action change, the second user that is in a call or that is going to have a call, or determine, according to an indication of the input call instruction of the second user, the second user that is in a call or that is going to have a call.

It should be understood that "an embodiment" or "an embodiment" mentioned in the whole specification does not mean that particular features, structures, or characteristics related to the embodiment are included in at least one embodiment of the present invention. Therefore, "in an embodiment" or "in an embodiment" appearing throughout the specification does not refer to a same embodiment. In addition, these particular features, structures, or characteristics may be combined in one or more embodiments by using any appropriate manner. It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes: a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes: a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely example embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A video communication method, applied to a scenario of video communication between a first location and a second location, and at least two users at the second location participate in the video communication, wherein the method comprises:
determining a first user and a second user that are in a call or that are going to have a call with each other, wherein the first user is located at the first location, the second user is located at the second location, and the second user is any one of the at least two users;
obtaining an eye-to-eye virtual view image of the first user; and
displaying the eye-to-eye virtual view image of the first user on a display at the second location in a manner used for corresponding to the second user, so that the eye-to-eye virtual view image of the first user corresponds to the second user, wherein the manner used for corresponding to the second user is used to indicate that the first user and the second user are in a call or are going to have a call with each other.

2. The method according to claim 1, wherein
different users at the second location correspond to different display areas on the display at the second location, and
the displaying the eye-to-eye virtual view image of the first user on a display at the second location in a manner used for corresponding to the second user comprises:
displaying, by using the display, the eye-to-eye virtual view image of the first user in an area corresponding to the second user on the display.

3. The method according to claim 1, wherein the method further comprises:
marking the eye-to-eye virtual view image of the first user by using a characteristic corresponding to the second user; and
the displaying the eye-to-eye virtual view image of the first user on a display at the second location in a manner used for corresponding to the second user comprises:
displaying, by using the display, an image obtained after the eye-to-eye virtual view image of the first user is marked by using the characteristic corresponding to the second user.

4. The method according to any one of claims 1 to 3, wherein
the determining a first user and a second user that are in a call or that are going to have a call with each other comprises:
detecting body action changes or input call instructions of the first user and the second user;
determining, according to the body action change or the input call instruction of the first user, the first user that is in a call or that is going to have a call; and
determining, according to the body action change or the input call instruction of the second user, the second user that is in a call or that is going to have a call.

5. The method according to any one of claims 1 to 4, wherein
the determining, according to the body action change or the input call instruction of the first user, the first user that is in a call or that is going to have a call comprises:
determining, when the body action change of the first user matches a preset body action change, the first user that is in a call or that is going to have a call, or determining, according to an indication of the input call instruction of the first user, the first user that is in a call or that is going to have a call; and
the determining, according to the body action change or the input call instruction of the second user, the second user that is in a call or that is going to have a call comprises:
determining, when the body action change of the second user matches a preset body action change, the second user that is in a call or that is going to have a call, or determining, according to an indication of the input call instruction of the second user, the second user that is in a call or that is going to have a call.

6. A video communication system, applied to a scenario of video communication between a first location and a second location, and at least two users at the second location participate in the video communication, wherein the device comprises:
a determining unit, configured to determine a first user and a second user that are in a call or that are going to have a call with each other, wherein the first user is located at the first location, the second user is located at the second location, and the second user is any one of the at least two users;
an obtaining unit, configured to obtain an eye-to-eye virtual view image of the first user; and
a display unit, configured to display the eye-to-eye virtual view image of the first user on a display at the second location in a manner used for corresponding to the second user, so that the eye-to-eye virtual view image of the first user corresponds to the second user, wherein the manner used for corresponding to the second user is used to indicate that the first user and the second user are in a call or are going to have a call with each other.

7. The system according to claim 6, wherein
different users at the second location correspond to different display areas on the display at the second location, and
the display unit is configured to display, by using the display, the eye-to-eye virtual view image of the first user in an area corresponding to the second user on the display.

8. The system according to claim 6, wherein the device further comprises:
a marking unit, configured to mark the eye-to-eye virtual view image of the first user by using a characteristic corresponding to the second user; and
the display unit is configured to display, by using the display, an image obtained after the eye-to-eye virtual view image of the first user is marked by using the characteristic corresponding to the second user.

9. The system according to any one of claims 6 to 8, wherein
the determining unit is configured to: detect body action changes or input call instructions of the first user and the second user;
determine, according to the body action change or the input call instruction of the first user, the first user that is in a call or that is going to have a call; and
determine, according to the body action change or the input call instruction of the second user, the second user that is in a call or that is going to have a call.

10. The system according to any one of claims 6 to 9, wherein
the determining unit is configured to: determine, when the body action change of the first user matches a preset body action change, the first user that is in a call or that is going to have a call, or determine, according to an indication of the input call instruction of the first user, the first user that is in a call or that is going to have a call; and
determine, when the body action change of the second user matches a preset body action change, the second user that is in a call or that is going to have a call, or determine, according to an indication of the input call instruction of the second user, the second user that is in a call or that is going to have a call.
